Europäisches Patentamt

European Patent Office

Office européen des brevets

(19)

(11) Veröffentlichungsnummer: **0 052 176**
**B1**

(12) ## EUROPÄISCHE PATENTSCHRIFT

(45) Veröffentlichungstag der Patentschrift:
06.03.85

(51) Int. Cl.⁴: **B 60 M 1/18**

(21) Anmeldenummer: **81105108.5**

(22) Anmeldetag: **01.07.81**

(54) **Streckentrenner mit zwei parallelen Isolierstoffgleitleisten.**

(30) Priorität: 13.11.80 DE 3042870
01.12.80 DE 3045258

(43) Veröffentlichungstag der Anmeldung:
26.05.82 Patentblatt 82/21

(45) Bekanntmachung des Hinweises auf die Patenterteilung:
06.03.85 Patentblatt 85/10

(84) Benannte Vertragsstaaten:
DE FR GB IT

(56) Entgegenhaltungen:
DE - A - 1 935 365
DE - A - 2 437 722
DE - B - 1 173 509
FR - A - 769 687
GB - A - 1 326 071

(73) Patentinhaber: **Siemens Aktiengesellschaft, Berlin und München Wittelsbacherplatz 2, D-8000 München 2 (DE)**

(72) Erfinder: **Menhorn, Hermann, Berliner Strasse 137, D-2410 Mölln (DE)**
Erfinder: **Müller, Georg, Obere Büch 2, D-8520 Buckenhof (DE)**
Erfinder: **Nitschke, Christoph, Dipl.-Ing., Esklistunastrasse 7, D-8520 Erlangen (DE)**
Erfinder: **Wehrberger, Helmut, Waldstrasse 26, D-8551 Röttenbach (DE)**
Erfinder: **Kaesewinkel, Klaus, Ludwig-Richter-Strasse 31, D-4350 Recklinghausen (DE)**

## Beschreibung

Die Erfindung bezieht sich auf einen Streckentrenner der im Oberbegriff des Anspruchs 1 genannten Art.

Aus der DE-PS 1 515 326 ist ein Streckentrenner für Fahrleitungen elektrischer Bahnen bekannt, bei dem die beiden Fahrleitungsenden jeweils über eine Fahrdrahtendklemme und ein Abfangstück an zwei mit ihren Flachseiten in einer Ebene angeordneten Isolierstoffgleitleisten befestigt sind. Die Isolierstoffgleitleisten, die aus faserverstärktem Kunststoff bestehen, bilden mit ihren Breitseiten Schleifflächen für einen Stromabnehmer. An den Abfangstücken sind zwischen den beiden Isolierstoffgleitleisten die beiden Fahrdrahtenden zur Bildung von Funkenhörnern hochgebogen, oder es sind gesonderte Funkenhörner befestigt, wobei die engste Stelle der einander zugewandten Funkenhörner durch die Enden der Funkenhörner gebildet wird, die über der Ebene der beiden Isolierstoffgleitleisten liegen. Die Faserverstärkung der Isolierstoffgleitleisten wird in der Praxis durch parallel zur Schleiffläche angeordnete Glasgewebe gebildet. Zur Erhöhung der Kriechstromfestigkeit ist die Gleitfläche der Isolierstoffgleitleisten mit einer glasfreien, verschleißfesten Schicht versehen.

In der DE-B-1 173 509 ist ein Streckentrenner beschrieben, bei dem zwei Isolierstoffgleitleisten durch harzgebundene Glasfaserstäbe von rundem Querschnitt verwendet sind. Die Glasfaserstäbe sind mit keramischen Bundringen umgeben, die auf die Stäbe aufgebracht (aufgeschraubt) und durch Scheiben getrennt sind. Zwischen den beiden Glasfaserstäben, deren Fasern parallel zur Gleitfläche liegen, sind Innenläufer vorgesehen, die Auflaufkufen für Funkenhörner bilden, deren Enden V-förmig abgebogen sind. An der Verbindungsstelle zwischen Innenläufer und Funkenhorn ist eine Armatur angeordnet, die zum Einstellen der Funkenhörner dient. Bei diesem Streckentrenner ist der Isolator aus vielen Bauteilen zusammengesetzt, so daß Wasser zwischen die Bundringe und die Scheiben eindringen kann und bei Frost durch Eisbildung im Inneren keramischer Bundringe platzen können.

Durch die DE-A-1 935 365 ist ein Streckentrenner bekannt, bei dem ein im Zug der Fahrleitung liegender Isolator mit einer an der Unterkante des Isolators angeordneten, auswechselbaren Laufleiste versehen ist. Diese Laufleiste besteht aus Epoxydharz mit waagerecht eingelagerten Roving-Gewebeschichten. Bei diesem Streckentrenner tritt ein seitliches Biegemoment auf. Ferner kann durch Feuchtigkeit im Spalt zwischen Isolator und Laufleiste eine erhebliche Kriechwegminderung und damit eine Minderung der Isoliereigenschaften eintreten.

Die FR-A-769 687 befaßt sich mit einem Streckentrenner, bei dem zwei parallele Isolatoren übereinander angeordnet sind. Dabei bildet der untere Isolator eine Schleifleiste für den Stromabnehmer. Dieser Streckentrenner kann an beliebiger Stelle der Fahrleitung ohne Hilfsspannung montiert werden. Dabei wird der Streckentrenner ohne Schleifleiste auf den durchgehenden Fahrdraht aufgesetzt und festgeklemmt. Nach Entfernen des im Bereich der Schleifleiste liegenden Fahrdrahtstückes werden die Fahrdrahtenden mittels einer Schraubvorrichtung nach oben gebogen und festgeklemmt. Anschließend kann die Schleifleiste montiert und verschraubt werden. Dabei setzt das Abfangen des Fahrdrahtes ein Verbiegen der Endstücke voraus, was einen Austausch des Streckentrenners erschwert. Ferner kann durch eindringende Feuchtigkeit an den Stoßkanten zwischen Isolator und Schleifleiste die Isolationsfähigkeit durch Kriechwegminderung eingeschränkt werden.

Bei einer durch die GB-A-1 326 071 bekannten Ausführung eines Streckentrenners ist ein Isolator verwendet, der aus einem Glasfieberstab besteht, der von einem zylindrischen Körper aus zykloaliphatischem Kunststoff umgeben ist. An der beschliffenen Seite des zylindrischen Körpers sind dabei Keramikkörper eingesetzt, die an der Verbindungsstelle die Form eines Schwalbenschwanzes oder von Sägezähnen aufweisen, um ein Ablösen der Keramikkörper zu vermeiden. Dabei verlaufen die Kermaikkörper schräg zur Achse des Isolierstabes. Hierbei ergeben sich durch unterschiedliche Materialien bei Temperaturänderungen unterschiedliche Ausdehnungen an den Verbindungsstellen, so daß Spalte entstehen können, in die Feuchtigkeit eindringt, so daß die Isolierfähigkeit herabgesetzt wird und bei tiefen Temperaturen durch Eisbildung in den Spalten Risse entstehen können. Ferner ist die Herstellung von Kunststoffisolatoren, die Keramikeinsätze tragen, mit sehr hohen Kosten verbunden.

Aufgabe der Erfindung ist es, einen Streckentrenner anzugeben, der einfach im Aufbau ist und bei kleinem Gewicht gute Isolationseigenschaften hat und eine längere Lebensdauer und größere Betriebssicherheit aufweist als die bekannten Ausführungen.

Diese Aufgabe wird ausgehend von einem Streckentrenner der eingangs genannten Art erfindungsgemäß durch die im Kennzeichen des Anspruches 1 angegebenen Maßnahmen gelöst.

Durch die Erfindung wird gegenüber Anordnungen mit parallel zur Gleitfläche angeordnete Faserverstärkung bei Erzielung gleichbleibender Gleiteigenschaften eine höhere mechanische Festigkeit und eine größere Steifigkeit erreicht. Dadurch ergibt sich eine höhere Verwindungssteifigkeit des Streckentrenners. Dabei wird verhindert, daß ein Lichtbogen in unmittelbarer Nähe der beiden Isolierstoffgleitleisten brennt und auf sie zerstörend einwirkt. Damit wird die Lebensdauer und Betriebssicherheit erhöht. Ferner wird ermöglicht, die Isolierstoffgleitleisten sehr eng aneinanderzudrücken, so daß Verwindungen sich nur unmerklich auf die Befahrungs-eigenschaften durch den Stromabnehmer aus-wirken. Da Spalte, in die Feuchtigkeit eindringen kann, vermieden sind, wird eine hohe Isolierfestigkeit erreicht.

Durch die im Anspruch 3 angegebene Ausbildung ist es möglich, den Streckentrenner mit Schleifenleisten ohne Zuhilfenahme einer Spannvorrichtung zu montieren und dadurch eine wesentliche Herabsetzung der Montagezeit zu erzielen.

Ein Ausführungsbeispiel der Erfindung ist in der Zeichnung dargestellt. Darin zeigt

Fig. 1 eine Seitenansicht eines Streckentrenners,

Fig. 2 eine Draufsicht auf den Streckentrenner gemäß Fig. 1,

Fig. 3 einen Klemmenkörper der Fahrdraht-endklemme des Streckentrenners,

Fig. 4 eine an einem Fahrdrahtende montierte Fahrdrahtendklemme mit angeklemmter Auflaufkufe eines Funkenhornes,

Fig. 5 eine Draufsicht auf die Gleitfläche einer Isolierstoffgleitleiste,

Fig. 6 die zugehörige Seitenansicht,

Fig. 7 eine Seitenansicht der Gleitfläche einer anderen Isolierstoffgleitleiste und

Fig. 8 die Gleitfläche einer Isolierstoffgleitleiste mit durch Kunststoff ausgefüllten Vertiefungen.

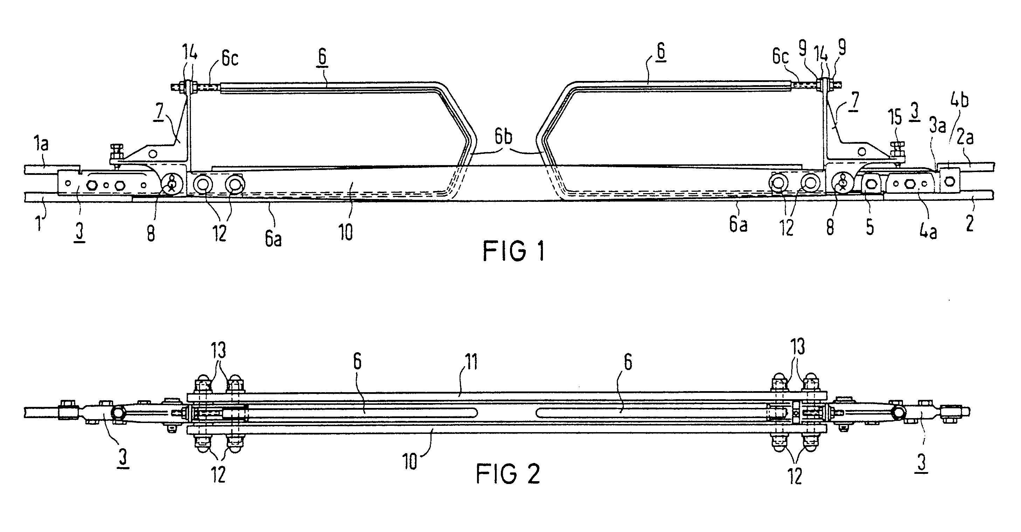

In Fig. 1 sind mit 1 und 2 die Enden der Fahr-drähte zweier Fahrleitungsabschnitte bezeich-net, die durch einen Streckentrenner isolierend überbrückt sind. Der Streckentrenner besitzt zwei Fahrdrahtendklemmen 3 zum Abfangen der Enden 1, 2 der Fahrdrähte, die mittels Klemmbacken 4a am Klemmkörper 3a der Fahrdrahtendklemme 3 angeklemmt werden. An dem Klemmkörper 3a der Fahrdrahtendklemme 3 ist ferner ein Klemmbacken 4b für ein kurzes Fahrdrahtstück 1a bzw. 2a vorgesehen, das dem befahrenden Fahrdraht beigeklemmt wird und einen weichen Übergang beim Befahren durch einen Stromabnehmer erzielen läßt. Weiter ist am Klemmenkörper 3a der Fahrdrahtendklemme 3 ein Klemmbacken 5 zum Anklemmen der Auflaufkufe 6a (unteren Kufe) eines Funkenhorns 6 angebracht.

Über einen Bolzen 8 ist an jedem Klemmenkörper 3a ein Abfangstück 7 justierbar gelagert. An diesem Abfangstück 7 sind waagerechte Bohrungen für eine Befestigung zweier Isolierstoffgleitleisten 10, 11 durch Gewindebolzen 12 mit Muttern 13 vorgesehen. Diese Isolierstoffgleitlei-sten 10, 11 sind parallel zueinander, seitlich der Funkenhörner 6 hochkant angeordnet (siehe auch Fig. 2), so daß sie gemeinsam mit den Gewindebolzen 12 an den Abfangstücken 7 befestigt werden können. Die Isolierstoffgleitleisten 10, 11 sind mit ihren Flachseiten senkrecht zu den Schleifstücken des Stromabnehmers angeordnet. Dadurch können die Maße und das Gewicht der Abfangstücke 7 klein gehalten werden. Es ist vorteilhaft, die Fahrdrahtendklemme und das Abfangstück 7 aus einer Kupfer-Zinn-Silizium-Legierung herzustellen. Dadurch wird eine hohe Korrosionsbeständigkeit bei großer Festigkeit erreicht.

Die unteren Schmalseiten der Isolierstoffgleitleisten 10, 11 (Fig. 1) bilden Gleitflächen für die Schleifleisten des Stromabnehmers. Die Isolierstoffgleitleisten 10, 11 sind dabei zu ihren Enden hin schmaler als in der Mitte, so daß eine gewünschte Profillinie erreicht wird, damit ein einwandfreies Auflaufen der Schleifflächen des Stromabnehmers gewährleistet ist. Um bei einer Beschädigung der Gleitflächen der Isolierstoff-gleitleisten eine Wiederverwendung zu ermögli-chen, verläuft die Verjüngung an den beiden Enden der Isolierstoffgleitleiste oben und unten symmetrisch. Bei einer Beschädigung der Gleitfläche braucht daher die betreffende Isolierstoffgleitleiste lediglich abgeschraubt und um 180° in ihrer Längsachse gedreht wieder eingesetzt zu werden.

Vorzugsweise bestehen die Isolierstoffgleitleisten 10, 11 aus faserverstärktem Kunststoff, wobei die Faserverstärkung durch parallelge-schichtete, senkrecht zur Gleitfläche angeordne-te Filamentgewebe, insbesondere aus Glas, gebildet ist, das mit cycloaliphatischem Epoxidharz zu einem festen Körper verpreßt ist. Dadurch wird bei Gewährleistung einer guten Gleitfähigkeit und hohen mechanischen Festigkeit eine große Beständigkeit gegen Wärme- und UV-Strahlen sowie eine hohe Kriechstromfestigkeit des Streckentrenners erreicht.

Die Funkenhörner 6, die dieselbe Querschnittsform haben wie der Fahrdraht, sind zumindest annähernd U-förmig ausgebildet, wobei der eine Schenkel die Auflaufkufe 6a, der andere Schenkel einen zum Abfangstück 7 zurückgeführten Einstellbügel 6c und der die beiden Schenkel verbindende Steg einen etwa V-förmigen Lichtbogenführungsteil 6b bildet.

Zweckmäßigerweise sind die die Lichtbogenführungsteile 6b bildenden Stege der Funkenhörner 6 derart angeordnet, daß die Spitzen der V-förmigen Stege einander zugewandt sind und in Betriebslage oberhalb der beiden Isolierstoffgleitleisten 10, 11 liegen. Auf diese Weise ist es möglich, die beiden Isolierstoffgleitleisten 10, 11 sehr nahe aneinanderzurücken, ohne daß die Gefahr besteht, daß entstehende Lichtbögen eine Zerstörung der Isolierstoffgleitleisten hervorrufen.

Die oberen Enden der Funkenhörner 6 sind als Einstellbügel 6c ausgebildet, mit einem Gewinde versehen und über Isolierzwischenstücke 14 elektrisch isoliert mit dem jeweiligen Abfangstück 7 durch Muttern 9 einstellbar verbunden. Auf diese Weise wird vermieden, daß ein brennender Lichtbogen über das Abfangstück 7 und den Einstellbügel 6c parallel zur unteren Kufe 6a gespeist wird, so daß eine rasche Löschung des Lichtbogens erreicht wird. Mittels einer an einer Nase des Abfangstückes 7 angeordneten Justierschraube 15, die sich auf der Fahrdrahtendklemme 3 abstützt, kann eine Einstellung der Lage der unteren Kufe 6a (Auflaufkufe) der Funkenhörner 6 zum Verlauf des Fahrdrahtes 1 bzw. 2 erreicht werden.

Bei der üblichen Montage des Streckentrenners wird der ununterbrochene Fahrdraht 1 bzw. 2 an der Einbaustelle durch eine parallel geklemmte Abspannvorrichtung (Kettenzug od. dgl.) entlastet und die für den Einbau des Streckentrenners erforderliche Schnittlänge ausgemessen. Dann wird das entsprechende Fahrdrahtstück herausgeschnitten. Hierbei können sich die Enden der Fahrdrähte verbiegen oder verdrehen. Dadurch wird das Anklemmen des Streckentrenners erschwert.

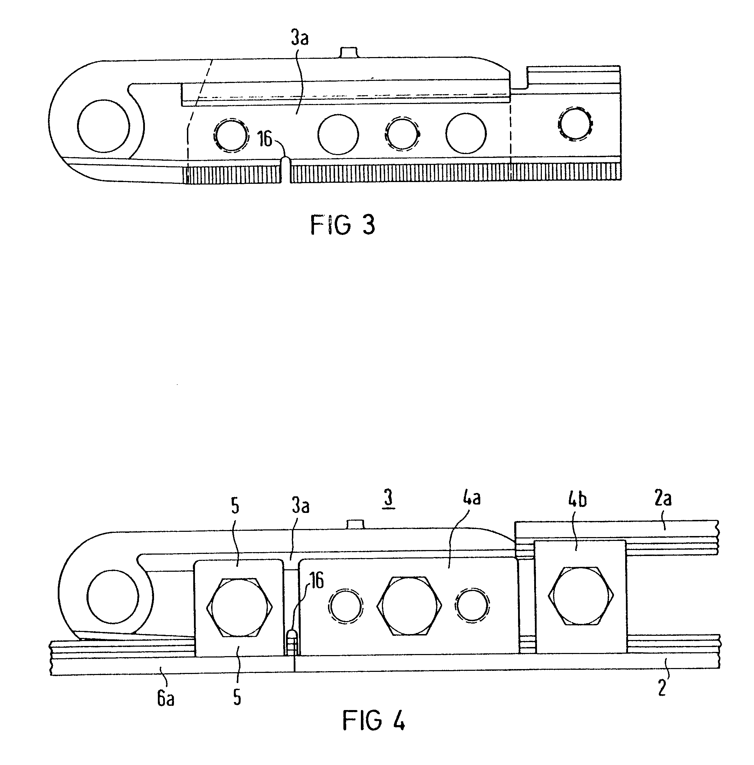

Eine wesentliche Vereinfachung der Montagearbeiten ohne Zuhilfenahme einer Spannvorrichtung bei bereits angebrachten Isolierstoffgleitleisten wird bei dem erfindungsgemäßen Streckentrenner dadurch erreicht, daß in dem Klemmenkörper 3a der Fahrdrahtendklemmen 3 zwischen dem Klemmbacken 4a für den Fahrdraht und dem Klemmbacken 5 für das Funkenhorn 6 eine von unten senkrecht zur Gleitebene verlaufende Aussparung 16 zum Einführen eines Schneidewerkzeuges für das Durchtrennen eines durchgehenden Fahrdrahtes vorgesehen ist (Fig. 3). Diese Aussparung ist vorzugsweise U-förmig. Dadurch kann der Streckentrenner mit den beschleifbaren Isolierleisten ohne Hilfsabspannung in eine vorhandene Fahrleitung an beliebiger Stelle eingesetzt werden, ohne daß dabei der Fahrdraht gebogen wird. Hierzu wird der Streckentrenner ohne Funkenhörner auf den durchgehenden Fahrdraht aufgesetzt und an ihm mittels der Klemmbacken 4a festgeklemmt. Dann wird der Fahrdraht an den in den Klemmenkörper 3a der Fahrdrahtendklemmen vorgesehenen Aussparungen 16 durchgetrennt und das dazwischenliegende Fahrdrahtstück entfernt. Dann werden die beiden Funkenhörner 6 mit ihrer unteren Kufe 6a spaltfrei an die Enden der Fahrdrähte 1 und 2 angesetzt und mittels der Klemmbacken 5 angeklemmt. Auf die Bolzenenden 12 und Muttern 13 werden zur Vermeidung von Überschlägen Kunststoffklappen aufgesetzt (Fig. 1).

Nach längerem Betrieb kann — u. a. bedingt durch die Filamentgewebe — die Kriechstromfestigkeit der Gleitflächen der Isolierstoffgleitleisten 10, 11 durch Ablagerungen des Abriebes (z. B. Kohlenstaub) der Schleifleisten der Stromabnehmer beeinträchtigt werden. Um dies zu vermeiden, ist es möglich, die Isolierstoffgleitleisten in vorgegebenen Zeitabständen zu reinigen.

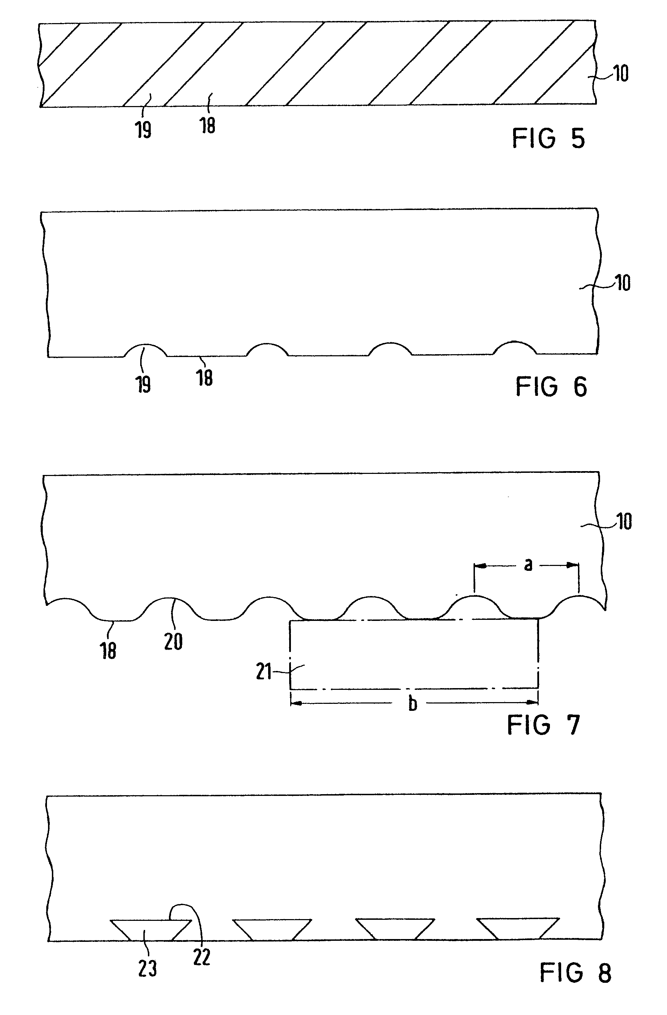

In vorteilhafter Weise können Ablagerungen an den Gleitflächen der Isolierstoffgleitleisten dadurch vermindert werden, daß die Gleitflächen 18 der Isolierstoffgleitleisten 10, 11 schräg zu deren Achse liegende flache Vertiefungen 19 aufweisen (Fig. 5 und 6).

Nach einer anderen, in Fig. 7 gezeigten Ausbildung besitzen die Gleitflächen 18 der Isolierstoffgleitleisten 10, 11 senkrecht oder schräg zu deren Achse liegende flache Vertiefungen 20, deren gegenseitiger Abstand a erheblich kleiner ist als die Breite b einer Schleifleiste 21 eines die Isolierstoffgleitleisten überstreichenden Stromabnehmers.

Wie das Ausführungsbeispiel in Fig. 8 zeigt, können zur Erhöhung der Kriechstromfestigkeit auch Vertiefungen 22 in der Gleitfläche 18 mit einem Kohle abweisenden Kunststoff 23 ausgefüllt sein.

## Patentansprüche

1. Streckentrenner für Fahrleitungen elektrischer Bahnen, bei dem die Enden (1, 2) zweier Fahrdrähte über je eine Fahrdrahtendklemme (3) und ein an dieser gelagertes Abfangstück (7) an zwei Isolierstoffgleitleisten (10, 11) befestigt sind, die aus faserverstärktem Kunststoff bestehen und deren untere Seiten Gleitflächen für einen Stromabnehmer bilden, wobei an den Abfangstücken (7) zwischen den beiden Isolierstoffgleitleisten (10, 11) Auflaufkufen (6a) von etwa V-förmigen Funkenhörnern (6) befestigt sind, denen Einstellbügel zugeordnet sind, dadurch gekennzeichnet, daß die Faserverstärkung durch parallelgeschichtete, senkrecht zur Gleitfläche angeordnete Filamentgewebe gebildet ist und daß die Funkenhörner (6) zumindest annähernd U-förmig ausgebildet sind, wobei der eine Schenkel eine Auflaufkufe (6a), der andere Schenkel einen zum Abfangstück (7) zurückgeführten Einstellbügel (6c) und der die beiden Schenkel verbindende Steg den etwa V-förmigen Lichtbogenführungsteil (6b) bildet.

2. Streckentrenner nach Anspruch 1, dadurch gekennzeichnet, daß die Einstellbügel (6c) der Funkenhörner über Isolierzwischenstücke (14) mit dem zugehörigen Abfangstück (7) verbunden sind.

3. Streckentrenner nach einem der vorhergehenden Ansprüche, dadurch gekennzeichnet, daß in dem Klemmkörper (3a) der Fahrdrahtendklemmen (3) zwischen dem Klemmbacken (4a) für den Fahrdraht und dem Klemmbacken (5) für das Funkenhorn (6) eine von unten senkrecht zur Gleitebene verlaufende Aussparung (16) zum Einführen eines Schneidewerkzeuges für das Durchtrennen eines durchgehenden Fahrdrahtes vorgesehen ist.

4. Streckentrenner nach Anspruch 1, dadurch gekennzeichnet, daß die die Lichtbogenführungsteile (6b) bildenden Stege der Funkenhörner (6) derart angeordnet sind, daß die Spitzen der V-förmigen Stege einander zugewandt sind und in Betriebslage oberhalb der beiden Isolierstoffgleitleisten (10, 11) liegen.

5. Streckentrenner nach Anspruch 1, dadurch gekennzeichnet, daß die Filamentgewebeschichten mit cycloaliphatischem Epoxidharz verpreßt sind.

6. Streckentrenner nach Anspruch 1, dadurch gekennzeichnet, daß die Isolierstoffgleitleisten (10, 11) zu ihren beiden Enden hin verjüngt sind.

7. Streckentrenner nach Anspruch 3, dadurch gekennzeichnet, daß die Fahrdrahtendklemmen (3) und/oder die Abfangstücke (7) aus einer Kupfer-Zinn-Silizium-Legierung bestehen.

8. Streckentrenner nach einem der vorhergehenden Ansprüche, dadurch gekennzeichnet, daß zur Verminderung von Ablagerungen die Gleitflächen (18) der Isolierstoffgleitleisten (10, 11) schräg zu deren Achse liegende flache Vertiefungen (19) aufweisen.

9. Streckentrenner nach einem der Ansprüche 1 bis 7, dadurch gekennzeichnet, daß zur Verminderung von Ablagerungen die Gleitflächen (18) der Isolierstoffgleitleisten (10, 11) schräg oder senkrecht zu deren Achse liegende flache Vertiefungen (20) besitzen, deren gegenseitiger Abstand (a) erheblich kleiner ist als die Breite (b) einer Schleifleiste (21) eines die Isolierstoffgleitleisten (10, 11) überstreichenden Stromabnehmers.

10. Streckentrenner nach einem der Ansprüche 1 bis 7, dadurch gekennzeichnet, daß in der Gleitfläche (18) der Isolierstoffgleitleisten Vertiefungen (22) vorgesehen sind, die mit einem Kode abweisendem Kunststoff (23) ausgefüllt sind.

## Claims

1. Section insulator for overhead contact systems of electrical paths, with which the ends (1, 2) of two contact wires are respectively secured via a contact wire end clamp (3) and an intercepting portion (7) mounted on this clamp to two insulating material sliding strips (10, 11) which are made of fibre-reinforced plastic and whose lower sides form sliding surfaces for a current collector, and secured on the intercepting portions (7) between the two insulating material sliding strips (10, 11) are forward end runners (6a) of approximately V-shaped spark horns (6), with which adjusting links are associated, characterised in that the fibre-reinforcement is formed by filament fabric disposed in parallel layers and vertical to the sliding surface, and that the spark horns (6) are constructed to be at least approximately U-shaped, whereby one arm thereof provides the forward end runner (6a) and the other arm an adjusting link (6c) returned to the intercepting portion (7), and the crosspiece joining the two arms forms the approximately V-shaped arc guiding portion (6b).

2. Section insulator according to claim 1, characterised in that the adjusting links (6c) of the spark horns are connected via insulating intermediate portions (14) to the associated intercepting portion (7).

3. Section insulator according to one of the preceding claims, characterised in that in the clamping body (3a) of the contact wire end clamps (3) between the clamping jaws (4a) for the contact wire and the clamping jaw (5) for the spark horn (6) there is provided a recess (16) running from below at right angles to the sliding plane for the insertion of a cutting tool for dividing a continuous contact wire.

4. Section insulator according to claim 1, characterised in that the crosspieces of the spark horns (6) forming the arc guiding portions (6b) are arranged in such a way that the points of the V-shaped crosspieces are turned towards one another and in the operating position lie above the two insulating material sliding strips (10, 11).

5. Section insulator according to claim 1, characterised in that the filament fabric layers are extruded from cyclo aliphatic epoxy resin.

6. Section insulator according to claim 2, characterised in that the insulating material sliding strips (10, 11) are tapered at both their ends.

7. Section insulator according to claim 3, characterised in that the contact wire end clamps (3) and/or the intercepting portions (7) are of a copper-tin-silicon alloy.

8. Section insulator according to one of the preceding claims, characterised in that to reduce deposits the sliding surfaces (18) of the insulating material sliding strips (10, 11) have shallow depressions (19) that are inclined to their axis.

9. Section insulator according to one of claims 1 to 7, characterised in that to reduce deposits, the sliding surfaces (18) of the insulating material sliding strips (10, 11) have shallow depressions (20) inclined or at right angles to their axis, the mutual spacing (a) of which is considerably less than the width (b) of a wearing strip (21) of a current collector sweeping over the insulating material sliding strips (10, 11).

10. Section insulator according to one of claims 1 to 7, characterised in that in the sliding surface (18) of the insulating material sliding strips, depressions (22) are provided which are filled with a carbon-repellent plastic (23).

## Revendications

1. Sectionneur pour des caténaires de voies électriques, dans lequel les extrémités (1, 2) de deux fils de contact sont fixées par l'intermédiaire de bornes respectives (3) d'extrémité des fils de contact et par l'intermédiaire d'organes de support respectifs (7) montés sur ces bornes, à deux barrettes de glissement (10, 11) en matériau isolant, qui sont constituées en un matériau isolant renforcé par des fibres et dont les faces inférieures forment des surfaces de glissement pour un trolley, et dans lequel des patins de montée (6a) de cornes pare-étincelles (6), approximativement en forme de V, auxquelles sont associés des étriers de réglage, sont fixés sur les organes de support (7) entre les deux barrettes de glissement en matériau isolant (10, 11), caractérisé par le fait que le renforcement formé de fibres est constitué par un tissu de filaments à couches parallèles, qui est disposé perpendiculairement à la surface de glissement, et que les cornes pare-étincelles (6) sont réalisées au moins approximativement en forme de U, une branche formant un patin de montée (6a) tandis que l'autre branche forme un étrier de réglage (6c) rabattu en direction de l'organe de support (7) et que l'élément reliant les deux branches forme la pièce (6b) de guidage de l'arc électrique, approximativement en forme de V.

2. Sectionneur suivant la revendication 1, caractérisé par le fait que les étriers de réglage (6a) des cornes pare-étincelles sont reliés par l'intermédiaire de pièces intercalaires isolantes (14) à l'organe de support associé (7).

3. Sectionneur suivant l'une des revendications précédentes, caractérisé par le fait que dans le corps de serrage (3a) des bornes d'extrémité (3) des fils de contact il est prévu entre la mâchoire de serrage (4a) pour les fils de contact et la mâchoire de serrage (5) pour la corne pare-étincelles (6) un évidement (16) s'étendant vers le bas perpendiculairement au plan de glissement et servant à l'introduction d'un outil de découpage servant à sectionner un fil de contact continu.

4. Sectionneur suivant la revendication 1, caractérisé par le fait que les éléments des cornes pare-étincelles (6) qui constituent les pièces (6b) de guidage des arcs électriques sont disposés de telle sorte que les pointes des éléments en forme de V sont tournées l'une vers l'autre et sont situées, dans la position de fonctionnement, au-dessus des deux barrettes de glissement en matériau isolant (10, 11).

5. Sectionneur suivant la revendication 1, caractérisé par le fait que les couches de tissu formées de filaments sont pressées avec une résine époxy cycloaliphatique.

6. Sectionneur suivant la revendication 1, caractérisé par le fait que les barrettes de glissement (10, 11) en matériau isolant sont amincies en direction de leurs deux extrémités.

7. Sectionneur suivant la revendication 3, caractérisé par le fait que les bornes d'extrémité (3) des fils de contact et/ou les organes de support (7) sont constitués par un alliage de cuivre-étain-silicium.

8. Sectionneur suivant l'une des revendications précédentes, caractérisé par le fait qu'en vue de réduire les dépôts, les surfaces de glissement (18) des barrettes de glissement en matériau isolant (10, 11) comportent des renfoncements plats (19) disposés obliquement par rapport à l'axe des barrettes.

9. Sectionneur suivant l'une des revendications 1 à 7, caractérisé par le fait qu'en vue de réduire les dépôts, les surfaces de glissement (18) des barrettes de glissement en matériau isolant (10, 11) possèdent les renfoncements plats (20) disposés obliquement ou perpendiculairement à l'axe des barrettes et dont l'écartement réciproque (a) est nettement inférieur à la largeur (b) d'une barette de frottement (21) d'un patin frotteur (21) d'un trolley parcourant les barrettes de glissement en matériau isolant (10, 11).

10. Sectionneur suivant l'une des revendications 1 à 7, caractérisé par le fait que dans la surface de glissement (18) des barrettes de glissement en matériau isolant il est prévu des renfoncements (22) qui sont remplis par une matière synthétique (23) répulsif pour le charbon.

FIG 1

FIG 2

0 052 176

FIG 3

FIG 4

FIG 5

19    18

10

FIG 6

19    18

10

FIG 7

18    20

21

a

b

10

FIG 8

23    22